# EUROPÄISCHE PATENTSCHRIFT

(11) **EP 3 090 196 B1**
(45) Veröffentlichungstag und Bekanntmachung des Hinweises auf die Patenterteilung: **14.02.2018**
(21) Anmeldenummer: 15714416.3
(22) Anmeldetag: 26.03.2015
(51) Int. Cl.: F16K 41/02, F16K 1/10

(54) **VENTIL**
VALVE
SOUPAPE

(30) Priorität: 31.03.2014 DE 102014004667
(43) Veröffentlichungstag der Anmeldung: 09.11.2016
(73) Patentinhaber: Festo AG & Co. KG, 73734 Esslingen (DE)
(72) Erfinder: HOTZ, Jasmin, 73669 Lichtenwald (DE); DREHER, Markus, 70567 Stuttgart (DE); KANTHACK, Michael, 71299 Wimsheim (DE)
(74) Vertreter: Patentanwälte Magenbauer & Kollegen Partnerschaft mbB
(86) Internationale Anmeldenummer: PCT/EP2015/000650
(87) Internationale Veröffentlichungsnummer: WO 2015/149919

(56) Entgegenhaltungen:
- WO-A2-2008/024898
- DE-A1- 2 252 532
- DE-B- 1 267 923
- US-A- 877 706
- US-A- 3 521 891

## Beschreibung

Die Erfindung betrifft ein Ventil, insbesondere Prozessventil, mit einem von Prozessmedium durchströmbaren Ventilgehäuse, in dem ein eine Durchströmöffnung umgebender Ventilsitz angeordnet ist, dem ein an einer Spindel angeordnetes Ventilglied derart zugeordnet ist, dass das Ventilglied mittels eines Stellhubs der Spindel zwischen einer Absperrstellung, in der das Ventilglied prozessmediumdicht dichtend am Ventilsitz anliegt, und einer Offenstellung, in der das Ventilglied vom Ventilsitz abgehoben ist, bewegbar ist, und wobei am Ventilgehäuse eine Schnittstelle zur Ankopplung einer den Stellhub der Spindel erzeugenden Antriebseinheit angeordnet ist, und wobei im Ventilgehäuse eine von der Spindel durchgriffene Dichtungseinrichtung aufgenommen ist, die eine mittels Federmitteln vorgespannte, unter Abdichtung an die Spindel anliegende Dichtungsmittel umfassende Dichtungsanordnung aufweist.

Ein Ventil dieser Art ist beispielsweise aus der
EP 2 110 585 A1 bekannt. Das dort offenbarte sogenannte Schrägsitz-Ventil besitzt ein Ventilgehäuse, das von Prozessmedium durchströmbar ist. Im Ventilgehäuse ist ein Ventilsitz ausgebildet, der eine Durchströmöffnung begrenzt. Dem Ventilsitz ist ein Dichtglied zugeordnet, das von einer Spindel getragen wird, die ihrerseits über einen pneumatischen Stellantrieb linear beweglich angetrieben ist, wodurch die Durchströmöffnung durch das Dichtglied wahlweise geöffnet oder geschlossen werden kann. Charakteristisch für solche Schrägsitz-Ventile ist, dass die durch den Ventilsitz aufgespannte Ventilsitzfläche schräg zur Strömungsrichtung des Prozessmediums ausgerichtet ist. Dies hat zur Folge, dass auch die Ausrichtung der Spindel schräg zur Strömungsrichtung des Prozessmediums verläuft und der Stellhub entsprechend schräg ausgerichtet ist. Bei dem vorerwähnten Stand der Technik ist am Ventilgehäuse eine Schnittstelle ausgebildet, die zur Ankopplung der pneumatischen Antriebseinheit dient. Hierzu ist ein Rohr vorgesehen, das in einen schräg vom Rest des Ventilgehäuses abragenden Stutzen eingeschraubt ist. Das Rohr ist Bestandteil des pneumatischen Stellantriebs, da an dem Rohr-Ende, das dem in das Ventilgehäuse eingeschraubten Rohr-Ende entgegengesetzt ist, der Zylinder des pneumatischen Stellantriebs befestigt ist. Das Rohr besitzt hierzu einen gegenüber dem Rest des Rohres durchmessergrößeren Befestigungsabschnitt, der gleichzeitig auch den Deckelabschnitt des Zylindergehäuses bildet, in dem wiederum ein Kolben mittels Druckluftbeaufschlagung verschieblich geführt ist, wobei der Kolben das Innere des Zylinders in zwei Kammern unterteilt. Das Rohr besitzt ferner noch eine weitere Aufgabe, es dient nämlich zur Aufnahme einer Dichtungseinrichtung, die eine Dichtungsanordnung in Form eines Dachmanschettenpakets aufweist, das über eine ebenfalls im Rohr befindliche Feder vorgespannt ist.

Infolge der Hubbewegung der Spindel verschleißen die Dachmanschetten des Dachmanschettenpakets, wodurch der Bedarf besteht, diese auswechseln zu können. Zum Auswechseln der Dichtungen muss jedoch der komplette pneumatische Stellantrieb vom Ventilgehäuse abmontiert werden. Zusätzlich muss dann noch das Rohr vom Rest des pneumatischen Stellantriebs getrennt werden, damit die Dichtungseinrichtung zugänglich wird. Dies ist sehr aufwendig.

Ein Schrägsitz-Ventil ist ferner aus der DE 22 52 532 bekannt. Das dort offenbarte Schrägsitz-Ventil besitzt ein Ventilgehäuse mit einer Schnittstelle zur Ankopplung eines pneumatischen Stellantriebs. Es ist hier eine Tragbüchse vorgesehen, die von der Ventilspindel durchragt wird und in die ein Dachmanschettenpaket aufgenommen ist. Die Tragbüchse wird in einen Stutzen des Ventilgehäuses eingesteckt, wobei ein axialer Anschlag in Form einer am Stutzen ausgebildeten Ringschulter vorgesehen ist. Die Tragbüchse ihrerseits besitzt die Schnittstelle zur Ankopplung des pneumatischen Stellantriebs. Dieser wird vor dem Einführen der Tragbüchse in den Stutzen mit der Tragbüchse zusammenmontiert, wobei eine von der Tragbüchse separate Ringscheibe an der Oberseite der Tragbüchse zur Anlage kommt. Nach dem Einschieben der Tragbüchse mitsamt dem pneumatischen Stellantrieb in den Stutzen erfolgt eine axiale Sicherung gegen Axialbewegung aus dem Stutzen heraus mittels einer Überwurfmutter, die auf ein am Stutzen ausgebildetes Außengewinde aufgeschraubt wird.

Zum Austausch der Dichtungen muss zunächst die Überwurfmutter gelöst und die Tragbüchse mitsamt dem pneumatischen Stellantrieb vom Ventilgehäuse abmontiert werden. Danach ist die Tragbüchse aufwendig von der Spindel zu demontieren.

DE1267923 offenbart ein Ventil nach dem Oberbegriff des Anspruchs 1.

Aufgabe der Erfindung ist es daher, ein Ventil der eingangs erwähnten Art zu schaffen, dessen Montage und Wartung in einfacher Weise durchführbar sind, insbesondere soll der Austausch von verschleißanfälligen Dichtungen in einfacher Weise möglich sein.

Diese Aufgabe wird durch ein Ventil mit den Merkmalen des unabhängigen Anspruchs 1 gelöst. Weiterbildungen der Erfindung sind in den Unteransprüchen dargestellt.

Das erfindungsgemäße Ventil zeichnet sich dadurch aus, dass die Dichtungseinrichtung in einer vom Ventilgehäuse gesonderten, als betriebsfertig vormontierten Baugruppe ausgebildete Dichtungspatrone aufgenommen ist, die ein am Ventilgehäuse befestigbares oder befestigtes Patronengehäuse aufweist, in dem die Dichtungsanordnung und die Federmittel derart aufgenommen sind, dass die Dichtungsanordnung durch die Federmittel federnd gegenüber dem Patronengehäuse vorgespannt ist.

Ventilgehäuse, Dichtungspatrone und angekoppelte Antriebseinheit sind also voneinander separat ausgebildete Baueinheiten, die in einfacher und schneller Weise zusammenmontiert oder demontiert werden können. Dadurch ist ein schneller und somit kostengünstiger Austausch von verschleißanfälligen Dichtungen möglich.

Da die Dichtungspatrone eine vormontierte Baugruppe ist, die sämtliche Komponenten der Dichtungseinrichtung enthält, müssen lediglich die Dichtungspatronen an sich ausgetauscht werden, ohne dass die Dichtungspatronen selber auseinandergebaut werden müssen. Es kann also eine Dichtungspatrone in ihrer Gesamtheit gegen eine andere ausgetauscht werden.

Bei einer Weiterbildung der Erfindung weist die Dichtungspatrone eine Befestigungsschnittstelle zu deren selbstsichernden Befestigung am Ventilgehäuse auf. Es sind also keine weiteren Befestigungs-Hilfsmittel notwendig, um die Dichtungspatrone am Ventilgehäuse zu montieren beziehungsweise bei Bedarf zu demontieren.

In besonders bevorzugter Weise ist die Befestigungsschnittstelle am Patronengehäuse ausgebildet.

Besonders bevorzugt umfasst die Befestigungsschnittstelle ein Gewinde, das ein Einschrauben der Dichtungspatrone in das Ventilgehäuse ermöglicht, was besonders schnell und einfach durchzuführen ist. Prinzipiell sind jedoch auch andere Befestigungsarten zur Befestigung der Dichtungspatrone am Ventilgehäuse denkbar, beispielsweise Rast-, Schnapp- oder Spannverbindungen.

Bei der Erfindung weist das Patronengehäuse einen Aufnahmeabschnitt zur Aufnahme der Dichtungsanordnung und der Federmittel auf, wobei der Aufnahmeabschnitt einen die Dichtungsanordnung und die Federmittel umhüllenden Hüllbereich und einen mit einem zentralen Durchgangsloch versehenen Bodenbereich aufweist. Der Bodenbereich weist an seiner Innenseite eine Konusfläche auf, die komplementär zu einer an der Außenseite der Dichtungsanordnung ausgebildeten Gegen-Konusfläche ausgebildet ist, wobei der Durchmesser des Durchgangsloches derart größer als der Außendurchmesser eines Endbereichs der Dichtungsanordnung ist, dass die Dichtungsanordnung infolge der zueinander komplementären Konusflächen und der mittels der Federmittel erzeugten Verspannung durch das Durchgangsloch hindurchragt und mit seinem freien Ende außerhalb des Hüllbereichs endet. Zweckmäßigerweise bildet ein endseitiges Dichtelement der Dichtungsanordnung einen Abstreifer, der auf der sich bewegenden Spindel befindlichen Schmutz oder Prozessmedium abstreift.

Bei einer Weiterbildung der Erfindung weist das Patronengehäuse einen mit dem Aufnahmeabschnitt verbundenen, mit einer Durchgangsöffnung für die Spindel versehenen Deckelabschnitt auf, an dem die Befestigungsschnittstelle ausgebildet ist.

Zweckmäßigerweise ist der Deckelabschnitt zylindrisch ausgebildet. In diesem Fall ist in bevorzugter Weise an der Mantelfläche des zylindrischen Deckelabschnitts ein Außengewinde zum Einschrauben in das Ventilgehäuse ausgebildet.

Bei einer Weiterbildung der Erfindung weist der Deckelabschnitt eine dem Aufnahmeabschnitt zugewandte, radial orientierte Stützfläche auf, an der sich die Federmittel abstützen. Der Deckelabschnitt des Patronengehäuses ist multifunktional, da an ihm die Befestigungsschnittstelle ausgebildet ist (Schnittstellenfunktion) und sich auch die Federmittel abstützen (Stützfunktion).

In besonders bevorzugter Weise sind Deckelabschnitt und Aufnahmeabschnitt untrennbar miteinander verbunden. Die untrennbare Einheit aus Deckelabschnitt und Aufnahmeabschnitt lässt sich besonders kostengünstig herstellen, da in diesem Fall auf Verbindungsmittel zur Verbindung des Deckelabschnitts mit dem Aufnahmeabschnitt verzichtet werden kann. Ferner verhindert die untrennbare Einheit das Auseinandermontieren der Dichtungspatrone, so dass ausgeschlossen bleibt, dass darin befindliche Dichtungsanordnung ausgetauscht und dieselbe Dichtungspatrone wiederverwendet wird. Dies wäre sehr zeitaufwendig. Die untrennbare Einheit aus Deckelabschnitt und Aufnahmeabschnitt gibt also zwangsläufig vor, dass eine Dichtungspatrone gegen eine neue ausgetauscht werden muss, wobei die auszutauschende Dichtungspatrone entsorgt oder recycelt werden kann.

Bei einer Weiterbildung der Erfindung weist die Dichtungseinrichtung eine separat von der Dichtungsanordnung ausgebildete, dichtend an die Spindel anliegende Dichtungseinheit auf, die axial beabstandet von der Dichtungsanordnung positioniert ist. Eine derartige Anordnung zweier an verschiedenen Stellen entlang des Verfahrwegs der Spindel positionierter Dichtungseinheiten beziehungsweise -anordnungen schafft eine doppelte Abdichtung, nämlich eine ventilseitige Abdichtung zum Prozessmedium hin und eine antriebsseitige Abdichtung zum Steuermedium hin. Dies ist besonders effektiv, da verhindert wird, dass Prozessmedium austritt oder Verschmutzungen in das Prozessmedium eingetragen werden.

In besonders bevorzugter Weise weist die Dichtungseinheit wenigstens ein ringförmiges Dichtelement mit wenigstens einer dichtend an die Spindel anliegenden Dichtlippe auf. In besonders bevorzugter Weise sind wenigstens zwei axial voneinander beabstandete Dichtlippen vorgesehen. Zweckmäßigerweise erfüllt die wenigstens eine Dichtlippe der Dichtungseinheit ebenfalls die Funktion eines Abstreifers. Die Kombination von Dichtungsanordnung mit Abstreifer und Dichtungseinheit mit Abstreifer schafft als doppelter Abstreifer eine besonders effektive Möglichkeit der Schmutzentfernung von der Spindel.

Bei einer Weiterbildung der Erfindung ist die Dichtungseinheit im Deckelabschnitt des Patronengehäuses angeordnet. Im Falle eines aus Elastomermaterial bestehenden Dichtelements kann dieses sich selbstzentrierend in einer hierfür vorgesehenen Aufnahme am Deckelabschnitt befestigt werden.

Bei einer Weiterbildung der Erfindung ist das Ventilgehäuse mehrteilig aufgebaut, mit einem den Ventilsitz aufweisenden Fluidführungsteil und einem separat von diesem ausgebildeten hohlzylindrischen Schnittstellenteil mit der Schnittstelle zur Ankopplung der Antriebseinheit. Insgesamt ergibt dies einen modularen Aufbau des Ventilgehäuses, da das Schnittstellenteil im Bedarfsfall ausgewechselt und gegen ein anderes Schnittstellenteil, das für die Ankopplung einer anderen Antriebseinheit geeignet und bestimmt ist, ausgetauscht werden kann.

Zweckmäßigerweise ist das Schnittstellenteil lösbar am Fluidführungsteil befestigt. Bei kleineren Nennweiten ist es möglich, dass Schnittstellenteil und Fluidführungsteil als einteiliges Bauteil ausgeführt sind, das beispielsweise aus Gussmaterial besteht.

In besonders bevorzugter Weise ist die lösbare Verbindung zwischen Schnittstellenteil und Fluidführungsteil über eine Verschraubung realisiert, die insbesondere ein am Schnittstellenteil ausgebildetes Außengewinde und ein an einem Kopplungsabschnitt des Fluidführungsteils ausgebildetes Innengewinde besitzt.

In besonders bevorzugter Weise ist die Dichtungspatrone in dem Schnittstellenteil aufgenommen und dort lösbar befestigt.

Ein bevorzugtes Ausführungsbeispiel der Erfindung ist in der Zeichnung dargestellt und wird im Folgenden näher erläutert. In der Zeichnung zeigen:
- Figur 1: eine perspektivische Darstellung eines bevorzugten Ausführungsbeispiels des erfindungsgemäßen Ventils,
- Figur 2: eine Frontansicht des Ventils von Figur 1,
- Figur 3: einen Längsschnitt durch das Ventil entlang der Linie III-III aus Figur 2,
- Figur 4: eine Explosionsdarstellung im Längsschnitt der Komponenten des Ventils gemäß Figur 3 und
- Figur 5: eine vergrößerte Darstellung der Einzelheit X aus Figur 4.

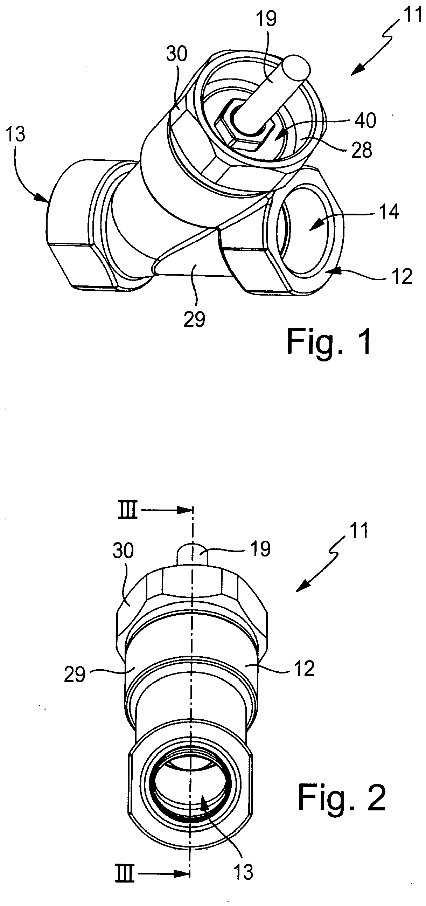

Die Figuren 1 bis 5 zeigen ein bevorzugtes Ausführungsbeispiel des erfindungsgemäßen Ventils 11. Das Ventil 11 ist dazu geeignet, als Prozessventil in der Prozessindustrie eingesetzt zu werden.

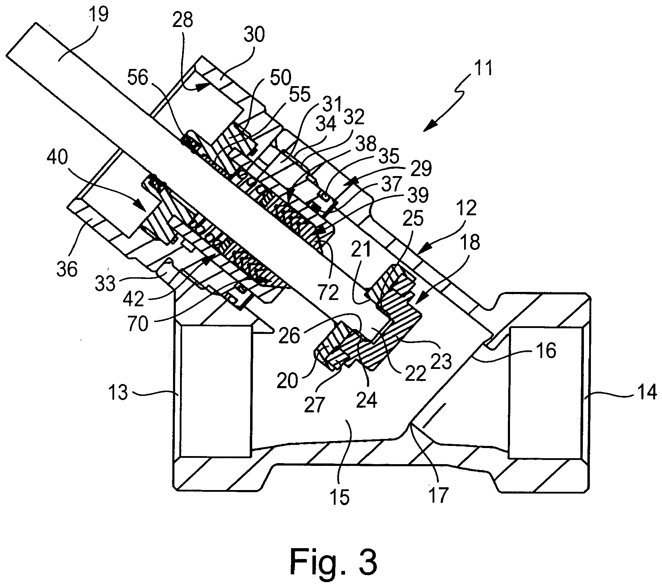

Wie insbesondere in den Figuren 1 und 3 dargestellt, besitzt das Ventil 11 ein Ventilgehäuse 12, in dem sich zwischen einem Eingang 13 und einem Ausgang 14 ein Durchströmungskanal 15 erstreckt.

Im Falle einer Verwendung in der Lebensmittelindustrie besteht das Ventilgehäuse zweckmäßigerweise aus Edelstahl. Werden als Prozessmedien aggressive Substanzen, beispielsweise Säuren, eingesetzt, besteht das Ventilgehäuse zweckmäßigerweise aus Kunststoffmaterial, das gegenüber derartigen Substanzen eine größere chemische Beständigkeit besitzt.

Im Durchströmungskanal 15 befindet sich zwischen dem Eingang 13 und dem Ausgang 14 eine Durchströmöffnung 16, die von einem ringförmigen Ventilsitz 17 umgeben ist. Zweckmäßigerweise ist der Ventilsitz 17 kreisringförmig ausgestaltet. Theoretisch wäre jedoch auch eine ovale Form des Ventilsitzes denkbar.

Dem Ventilsitz 17 ist ein Ventilglied 18 zugeordnet, das seinerseits an einer Spindel 19 angeordnet ist.

Das Ventilglied 18 ist rein beispielhaft mehrteilig gezeigt und besitzt in diesem Fall einen Teller 20, der mit einem Durchgangsloch 21 versehen ist, durch das hindurch ein Endabschnitt 22 der Spindel hindurchsteckbar ist. Der Teller ist beispielsweise mit der Spindel verschweißt. Zum Ventilglied 18 zählt ferner noch ein Gegenstück 23, das mit einer sacklochartigen Aufnahmeöffnung 24 versehen ist, die mit einem Innengewinde 25 versehen ist. Komplementär dazu befindet sich am Endabschnitt 22 der Spindel 19 ein Außengewinde 26, womit sich das Gegenstück 23 auf den Endabschnitt 22 der Spindel 19 schrauben lässt. Zwischen dem Gegenstück 23 und dem Teller 20 ist ein ringförmiger Dichtring 27 eingespannt, der zweckmäßigerweise aus Kunststoffmaterial, beispielsweise PTFE, besteht.

Das Ventilglied 18 ist mittels eines Stellhubs der Spindel 19 zwischen einer Absperrstellung, in der das Ventilglied 18 mit seinem Dichtring 27 fluiddicht am Ventilsitz anliegt, und einer Offenstellung (Figur 3), in der das Ventilglied 18 vom Ventilsitz 17 abgehoben ist, bewegbar. Der Stellhub der Spindel 19 wird durch eine Antriebseinheit (nicht dargestellt) erzeugt, die über eine am Ventilgehäuse 12 ausgebildete Schnittstelle 28 angekoppelt ist. Bei der Antriebseinheit kann es sich um eine fluidische, insbesondere pneumatische Antriebseinheit handeln. Im letztgenannten Fall lässt sich der Stellhub der Spindel 19 beispielsweise durch einen fluiddruckbeaufschlagbaren Arbeitszylinder erzeugen. Alternativ wäre es jedoch auch möglich, dass die Antriebseinheit als elektrische Antriebseinheit ausgebildet ist.

Wie insbesondere in Figur 3 zu erkennen, ist das Ventilgehäuse 12 mehrteilig aufgebaut. Das Ventilgehäuse 12 besitzt ein Fluidführungsteil 29, in dem der Durchströmkanal 15 und der Ventilsitz 17 ausgebildet sind. Ferner weist das Ventilgehäuse 12 ein Schnittstellenteil 30 auf, an dem die Schnittstelle 28 zur Ankopplung der Antriebseinheit ausgebildet ist. Das Schnittstellenteil 30 ist hohlzylindrisch ausgebildet und besitzt mehrere Funktionsabschnitte. Einer dieser Funktionsabschnitte ist ein zylindrischer Fixierabschnitt 31, an dessen Mantelfläche ein Außengewinde 32 ausgebildet ist. Mit diesem Außengewinde 32 korrespondiert ein an einem Fixierstutzen 33 des Fluidführungsteils 29 ausgebildetes Innengewinde 34, wodurch das Schnittstellenteil 30 auf das Fluidführungsteil 29 geschraubt werden kann. Somit ist auch eine einfache Demontage des Schnittstellenteils 30 vom Fluidführungsteil 29 möglich, um dieses beispielsweise gegen ein Schnittstellenteil 30 mit einer anderen Schnittstelle 28 auszutauschen. Bei kleineren Nennweiten ist es möglich, dass Schnittstellenteil 30 und Fluidführungsteil 29 als einteiliges Bauteil ausgeführt sind, das beispielsweise aus Gussmaterial besteht.

An der äußeren Mantelfläche des Fixierabschnitts 31 befindet sich ferner eine umlaufende Ringnut, in die ein Dichtring 35 eingelegt und dort fixiert ist. Dieser äußere Dichtring 35 sorgt für die Abdichtung zwischen Schnittstellenteil 30 und Fluidführungsteil 29.

Am Fixierabschnitt 31 befindet sich an der inneren Mantelfläche eine weitere Ringnut, in die ein innerer Dichtring 37 eingelegt und dort fixiert ist.

Als weiterer Funktionsabschnitt des Schnittstellenteils 30 ist ein Schnittstellenabschnitt 36 zu nennen, an dem die Schnittstelle 28 ausgebildet ist. Der Schnittstellenabschnitt ist einstückig mit dem Fixierabschnitt 31 verbunden, besitzt jedoch gegenüber diesem einen größeren Durchmesser, wodurch die am Übergang zwischen dem Schnittstellenabschnitt 36 und dem Fixierabschnitt 31 ausgebildete Ringschulter einen Anschlag bildet, der an den Fixierstutzen 33 des Fluidführungsteils 29 anschlägt und damit die Einschraubtiefe des Schnittstellenteils 30 vorgibt.

Zum Ventil 11 gehört ferner eine von der Spindel 19 durchgriffene Dichtungseinrichtung 38, die eine mittels Federmitteln vorgespannte, unter Abdichtung an die Spindel 19 anliegende Dichtungsmittel umfassende Dichtungsanordnung 39 aufweist.

Die Dichtungseinrichtung 38 ist in einer vom Ventilgehäuse 12 gesonderten, als betriebsfertig vormontierte Baugruppe ausgebildeten Dichtungspatrone 40 aufgenommen.

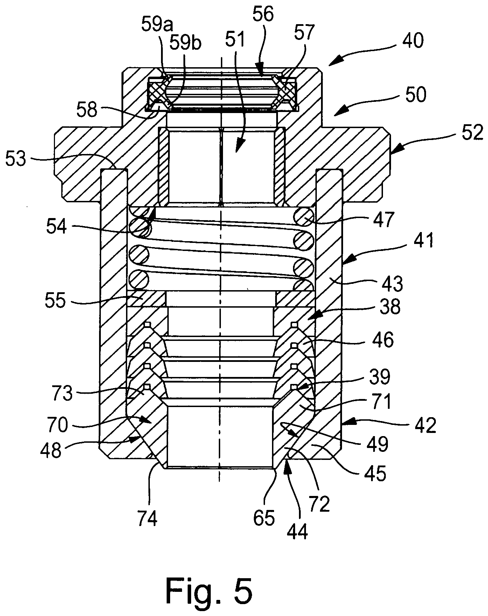

Wie insbesondere in Figur 5 dargestellt, besitzt die Dichtungspatrone 40 ein am Ventilgehäuse 12 befestigbares oder befestigtes Patronengehäuse 41, in dem die Dichtungsanordnung 39 und die Federmittel aufgenommen sind.

Das Patronengehäuse 41 besitzt mehrere Funktionsabschnitte. Es ist ein Aufnahmeabschnitt 42 zur Aufnahme der Dichtungsanordnung 39 und der Federmittel vorgesehen. Der Aufnahmeabschnitt 42 ist becherartig ausgestaltet und besitzt einen die Dichtungsanordnung 39 und die Federmittel umhüllenden Hüllbereich 43 und einen mit einem zentralen Durchgangsloch 44 versehenen Bodenbereich 45.

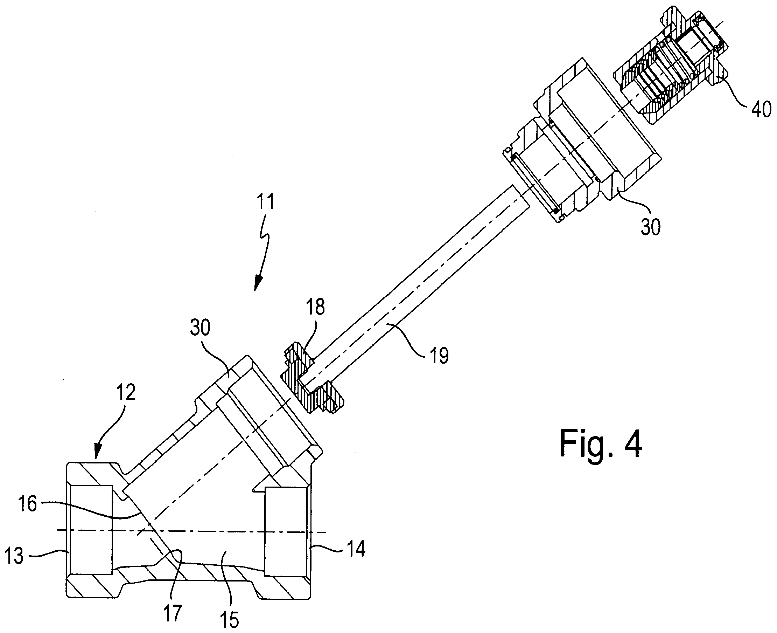

Die Dichtungsanordnung ist beispielhaft in Form eines Dachmanschettenpakets gezeigt, wobei mehrere in Axialrichtung aufeinandergestapelte ringförmige Dachmanschetten 46 als einzelne Dichtelemente vorgesehen sind. Die Dachmanschetten 46 sind, wie insbesondere in Figuren 4 und 5 dargestellt, im Querschnitt in etwa V-förmig ausgestaltet und sind reiterartig aufeinandergestapelt, so dass sich die Dachmanschetten 46 bei Druckbeaufschlagung radial aufweiten und somit für eine fluiddichte Anlage an die Spindel 19 sorgen. Der Anpressdruck der Dachmanschetten 46 wird über die bereits erwähnten Federmittel erzeugt, die eine Druckfeder 47 umfassen und die in nachfolgend noch näher erläuterter Weise für eine Vorspannung des gesamten Dachmanschettenpakets sorgen.

Wie insbesondere in Figur 5 dargestellt, umfasst die Dichtungsanordnung 39 einen Abstreifer 70, der dem Bodenbereich zugeordnet und dort gelagert ist. Der Abstreifer 70 besteht ebenfalls aus Kunststoffmaterial, das jedoch gegenüber dem Kunststoffmaterial der Dachmanschetten steifer ausgebildet sein kann. Der Abstreifer 70 besitzt einen hohlzylindrischen Basisabschnitt 71, an dessen Stirnfläche ein ringförmiger Lagerhöcker 73 nach oben abragt, auf dem die darüber angeordneten Dachmanschetten 46 reiterartig gelagert sind. An den Basisabschnitt 71 schließt sich in axialer Richtung ein Lippenabschnitt 72 an, der an seinem Außenumfang eine Gegen-Konusfläche 48 aufweist, die mit einer an der Innenseite des Bodenbereichs 45 ausgebildeten Konusfläche 49 zusammenwirkt.

Als weiterer Funktionsabschnitt des Patronengehäuses 41 ist ein Deckelabschnitt 50 zu nennen, der eine Durchgangsöffnung 51 für die Spindel aufweist. An dem Deckelabschnitt befindet sich eine Befestigungsschnittstelle 52, die nachstehend noch näher erläutert wird. Der Deckelabschnitt 50 ist zylindrisch ausgestaltet und besitzt konzentrisch zu seiner Durchgangsöffnung 51 eine Ringnut 53, in die ein Endabschnitt des Hüllbereichs 43 des Aufnahmeabschnitts 42 eintaucht und dort mit dem Deckelabschnitt 50 verbunden ist. Zweckmäßigerweise ist der Aufnahmeabschnitt 42, also der Hüllbereich 43, mit dem Deckelabschnitt 50 verschweißt. Die zwischen der Ringnut 53 und der Durchgangsöffnung 51 ausgebildete ringförmige Stirnfläche des Deckelabschnitts 50 bildet eine Stützfläche 54, an der sich die Druckfeder 47 abstützt. Das entgegengesetzte Ende der Druckfeder 47 stützt sich an einem beweglich innerhalb des Hüllbereichs 43 gelagerten Stützring 55 ab, der beispielsweise als Unterlegscheibe ausgebildet sein kann. Der Stützring 55 wird durch die Druckfeder 47 auf das Dachmanschettenpaket gedrückt, wodurch dieses und die Dachmanschetten 46 in Richtung zum Bodenbereich 45 hin vorgespannt werden. Der Anpressdruck der Druckfeder 47 sorgt für eine radiale Aufspreizung der Dachmanschetten 46 und für eine axiale Verlagerung des Dachmanschettenpakets. Dadurch, dass das Durchgangsloch 44 im Bodenbereich 45 größer als der Außendurchmesser der Spindel 19 ist, kann ein Teil des Lippenabschnitts 72 des Abstreifers 70 durch das Durchgangsloch 44 hindurchtreten, so dass er, wie in Figur 5 gezeigt, ein Stück weit außerhalb des Aufnahmeabschnitts endet. Der vorstehende ringförmige Teil des Lippenabschnitts 72 ist somit in der Lage, an der Spindel 19 befindlichen Schmutz, Prozessmedium oder dergleichen abzustreifen oder abzuschaben.

Im Deckelabschnitt 50 ist ferner im Bereich der Durchgangsöffnung 51 eine Lagerbuchse 55 befestigt, beispielsweise eingepresst, die zur Lagerung und zur radialen Fixierung der axial beweglichen Spindel 19 dient.

Die Dichtungseinrichtung 38 umfasst ferner zusätzlich zu der Dichtungsanordnung 39 eine Dichtungseinheit 56, die separat von der Dichtungsanordnung 39 ausgebildet ist. Die Dichtungseinheit 56 umfasst wenigstens ein ringförmiges Dichtelement 57, das in einem hierfür im Deckelabschnitt 50 ausgebildeten ringförmigen Lagerraum 58 befestigt ist. Das Dichtelement 57 besteht aus Elastomermaterial. Das Dichtelement 57 besitzt im Beispielsfall zwei axial voneinander beabstandete Dichtlippen 59a, 59b, die dichtend an dem Außenumfang der Spindel 19 anliegen und damit für eine fluiddichte Abdichtung sorgen. Zusätzlich zur Abdichtfunktion haben die Dichtlippen 59a, 59b noch eine weitere Funktion, sie dienen nämlich jeweils als Abstreifer, wodurch verhindert wird, dass von der Umgebung oder über das Steuermedium eingetragener Schmutz in das Prozessmedium gelangt.

Die Dichtungspatrone 40 stellt also eine doppelte Abdichtung bereit, nämlich eine Abdichtung zum Prozessmedium und eine Abdichtung zum Steuermedium beziehungsweise zur Umgebung hin. Ferner stellt die Dichtungspatrone 40 einen doppelten Abstreifer bereit.

Bei der Montage des Ventils 11, die aus Figur 4 ersichtlich ist, werden in schneller und einfacher Weise verschiedene Module zusammengesetzt. Zunächst wird die Spindel 19, die von der Antriebseinheit trennbar ausgestaltet ist, in das Fluidführungsteil 29 des Ventilgehäuses 12 eingesetzt. Danach kann das Schnittstellenteil 30 auf das Fluidführungsteil 29 aufgeschraubt werden. Schließlich lässt sich die Dichtpatrone 40 in das Schnittstellenteil 30 einschrauben. Alternativ kann die Dichtungspatrone 40 auch bereits vor der Befestigung des Schnittstellenteils 30 am Fluidführungsteil 29 in das Schnittstellenteil 30 eingeschraubt werden. Schließlich lässt sich die Antriebseinheit ankoppeln, indem eine hierfür vorgesehene Komponente der Antriebseinheit an der Schnittstelle 28 mit dem Schnittstellenteil 30 verschraubt wird. Die Befestigung der Antriebseinheit an der Schnittstelle 28 ist unabhängig von der Dichtungspatrone 40. Die Dichtungspatrone ist also nicht notwendig für die Ankopplung der Antriebseinheit. Demnach ist auch die Demontage des Ventils 11, beispielsweise zum Austausch der Dichtungspatrone 40, sehr einfach und schnell durchführbar, indem der Antrieb von der Schnittstelle 28abgekoppelt und die Dichtungspatrone 40 von dem Schnittstellenteil 30 abgeschraubt wird.

## Patentansprüche

1. Ventil, mit einem von Prozessmedium durchströmbaren Ventilgehäuse (12), in dem ein eine Durchströmöffnung (16) umgebender Ventilsitz (17) angeordnet ist, dem ein an einer Spindel (19) angeordnetes Ventilglied (18) derart zugeordnet ist, dass das Ventilglied (18) mittels eines Stellhubs der Spindel (19) zwischen einer Absperrstellung, in der das Ventilglied (18) prozessmediumdicht dichtend am Ventilsitz (17) anliegt, und einer Offenstellung, in der das Ventilglied (18) vom Ventilsitz (17) abgehoben ist, bewegbar ist, und wobei am Ventilgehäuse (12) eine Schnittstelle (28) zur Ankopplung einer den Stellhub der Spindel (19) erzeugenden Antriebseinheit angeordnet ist, und wobei im Ventilgehäuse (12) eine von der Spindel (19) durchgriffene Dichtungseinrichtung (38) aufgenommen ist, die eine mittels Federmitteln vorgespannte, unter Abdichtung an die Spindel (19) anliegende Dichtungsmittel umfassende Dichtungsanordnung (39) aufweist, wobei die Dichtungseinrichtung (38) in einer vom Ventilgehäuse (12) gesonderten, als betriebsfertig vormontierte Baugruppe ausgebildeten Dichtungspatrone (40) aufgenommen ist, die ein am Ventilgehäuse (12) befestigbares oder befestigtes Patronengehäuse (41) aufweist, in dem die Dichtungsanordnung (39) und die Federmittel derart aufgenommen sind, dass die Dichtungsanordnung (39) durch die Federmittel federnd gegenüber dem Patronengehäuse (41) vorgespannt ist, wobei das Patronengehäuse (41) einen Aufnahmeabschnitt (42) zur Aufnahme der Dichtungsanordnung (39) und der Federmittel aufweist, wobei der Aufnahmeabschnitt (42) einen die Dichtungsanordnung (39) und die Federmittel umhüllenden Hüllbereich (43) und einen mit einem zentralen Durchgangsloch (44) versehenen Bodenbereich (45) aufweist, **dadurch gekennzeichnet, dass** der Bodenbereich (45) an seiner Innenseite eine Konusfläche (49) aufweist, die komplementär zu einer an der Außenseite der Dichtungsanordnung (39) ausgebildeten Gegen-Konusfläche (48) ausgebildet ist, wobei der Durchmesser des Durchgangsloches (44) derart größer als der Außendurchmesser eines Endbereichs der Dichtungsanordnung (39) ist, dass die Dichtungsanordnung (39) infolge der zueinander komplementären Konusflächen (48, 49) und der mittels der Federmittel erzeugten Vorspannung durch das Durchgangsloch (44) hindurchragt und mit seinem freien Ende außerhalb des Hüllbereichs (43) endet.

2. Ventil nach Anspruch 1, **dadurch gekennzeichnet, dass** die Dichtungspatrone (40) eine Befestigungsschnittstelle (52) zu deren selbstsichernden Befestigung am Ventilgehäuse (12) aufweist, wobei vorzugsweise die Befestigungsschnittstelle (52) am Patronengehäuse (41) ausgebildet ist.

3. Ventil nach Anspruch 2, **dadurch gekennzeichnet, dass** die Befestigungsschnittstelle (52) ein Gewinde umfasst, wobei vorzugsweise ein an der Außenfläche des Patronengehäuses (41) ausgebildetes Außengewinde (32) vorgesehen ist.

4. Ventil nach einem der vorhergehenden Ansprüche, **dadurch gekennzeichnet, dass** das Patronengehäuse (41) einen mit dem Aufnahmeabschnitt (42) verbundenen, mit einer Durchgangsöffnung (51) für die Spindel (19) versehenen Deckelabschnitt (50) aufweist, an dem die Befestigungsschnittstelle ausgebildet ist, wobei vorzugsweise der Deckelabschnitt (50) zylindrisch ausgebildet ist und an seiner Mantelfläche das Außengewinde (32) zum Einschrauben in das Ventilgehäuse (12) ausgebildet ist.

5. Ventil nach Anspruch 4, **dadurch gekennzeichnet, dass** der Deckelabschnitt (50) eine dem Aufnahmeabschnitt (42) zugewandte Stützfläche (54) aufweist, an der sich die Federmittel abstützen.

6. Ventil nach Anspruch 4 oder 5, **dadurch gekennzeichnet, dass** Deckelabschnitt (50) und Aufnahmeabschnitt (42) untrennbar miteinander verbunden, insbesondere miteinander verschweißt sind.

7. Ventil nach einem der vorhergehenden Ansprüche, **dadurch gekennzeichnet, dass** die Dichtungseinrichtung (38) eine separat von der Dichtungsanordnung (39) ausgebildete, dichtend an die Spindel (19) anliegende Dichtungseinheit (56) aufweist, die axial beabstandet von der Dichtungsanordnung (39) positioniert ist, wobei vorzugsweise die Dichtungseinheit (56) wenigstens ein ringförmiges Dichtelement (57) mit wenigstens einer dichtend an die Spindel (19) anliegenden Dichtlippe (59a, 59b) aufweist.

8. Ventil nach Anspruch 7, **dadurch gekennzeichnet, dass** das ringförmige Dichtelement (57) wenigstens zwei axial voneinander beabstandete Dichtlippen (59a, 59b) aufweist.

9. Ventil nach Anspruch 7 oder 8, **dadurch gekennzeichnet, dass** die Dichtungseinheit (56) im Deckelabschnitt (50) des Patronengehäuses (41) angeordnet ist.

10. Ventil nach einem der vorhergehenden Ansprüche, **dadurch gekennzeichnet, dass** das Ventilgehäuse (12) mehrteilig aufgebaut ist, mit einem den Ventilsitz (17) aufweisenden Fluidführungsteil (29) und einem separat von diesem ausgebildeten hohlzylindrischen Schnittstellenteil (30) mit der Schnittstelle (28) zur Ankopplung der Antriebseinheit.

11. Ventil nach Anspruch 10, **dadurch gekennzeichnet, dass** das Schnittstellenteil (30) lösbar am Fluidführungsteil (29) befestigt ist.

12. Ventil nach Anspruch 11, **dadurch gekennzeichnet, dass** die lösbare Verbindung zwischen Schnittstellenteil (30) und Fluidführungsteil (29) über eine Verschraubung realisiert ist, die insbesondere ein am Schnittstellenteil (30) ausgebildetes Außengewinde (32) und ein an einem Kopplungsabschnitt des Fluidführungsteils (29) ausgebildetes Innengewinde besitzt.

13. Ventil nach einem der Ansprüche 10 bis 12, **dadurch gekennzeichnet, dass** die Dichtungspatrone (40) in das Schnittstellenteil aufgenommen und dort lösbar befestigt ist.

## Claims

1. Valve with a valve housing (12) through which process medium may flow and in which is located a valve seat (17) encompassing a through-flow orifice (16) and assigned a valve member (18) mounted on a spindle (19) in such a way that the valve member (18) is movable by means of a stroke of the spindle (19) between a blocking position in which the valve member (18) fits up with process-medium-tight sealing against the valve seat (17), and an open position in which the valve member (18) is lifted from the valve seat (17), and wherein an interface (28) for connecting a drive unit generating the stroke of the spindle (19) is provided on the valve casing (12), and wherein there is accommodated in the valve housing (12) a sealing device (38) through which the spindle (19) passes, which has a sealing assembly (39) biased by spring means and including sealing means in sealing contact with the spindle (19), wherein the sealing device (38) is accommodated in a sealing cartridge (40), separate from the valve housing (12), designed as a ready for use pre-assembled module and having a cartridge housing (41) which may be or is attached to the valve casing (12) and in which the sealing assembly (39) and the spring means are so accommodated that the sealing assembly (39) is spring-biased by the spring means against the cartridge housing (41), wherein the cartridge housing (41) has a locating section (42) to accommodate the sealing assembly (39) and the spring means, wherein the locating section (42) has an envelope area (43) enveloping the sealing assembly (39) and the spring means, and a bottom area (45) provided with a central through hole (44), **characterised in that** the bottom area (45) has on its inner side a cone surface (49) which is complementary to a mating cone surface (48) formed on the outer side of the sealing assembly (39), wherein the diameter of the through hole (44) is greater than the external diameter of an end section of the sealing assembly (39) in such a way that the sealing assembly (39), due to the complementary cone faces (48, 49) and the bias generated by the spring means, extends through the through hole (44) and ends with its free end outside the envelope area (43).

2. Valve according to claim 1, **characterised in that** the sealing cartridge (40) has a mounting interface (52) for its self-retaining mounting on the valve casing (12), wherein preferably the mounting interface (52) is formed on the cartridge housing (41).

3. Valve according to claim 2, **characterised in that** the mounting interface (52) includes a thread, wherein preferably an external thread (32) formed on the outer surface of the cartridge housing (41) is provided.

4. Valve according to any of the preceding claims, **characterised in that** the cartridge housing (41) has a cover section (50), connected to the locating section (42) and provided with a through orifice (51) for the spindle (19), on which the mounting interface is formed, wherein preferably the cover section (50) is cylindrical and the external thread (32) for screwing into the valve casing (12) is formed on its peripheral surface.

5. Valve according to claim 4, **characterised in that** the cover section (50) has a support surface (54) facing the locating section (42) and on which the spring means rest.

6. Valve according to claim 4 or 5, **characterised in that** the cover section (50) and the locating section (42) are connected, in particular welded, to one another.

7. Valve according to any of the preceding claims. **characterised in that** the sealing device (38) has a seal unit (56), separate from the sealing assembly (39) and fitting up against the spindle (19) with sealing, which is positioned with axial clearance from the sealing assembly (39), wherein preferably the seal unit (56) has at least one annular sealing element (57) with at least one seal lip (59a, 59b) in sealing contact with the spindle (19).

8. Valve according to claim 7, **characterised in that** the annular sealing element (57) has at least two seal lips (59a, 59b) with axial clearance from one another.

9. Valve according to claim 7 or 8, **characterised in that** the seal unit (56) is mounted in the cover section (50) of the cartridge housing (41).

10. Valve according to any of the preceding claims, **characterised in that** the valve casing (12) has a multi-part structure, with a fluid guidance part (29) which has the valve seat (17) and, separate from the former, a hollow cylindrical interface part (30) with the interface (28) for connecting the drive unit.

11. Valve according to claim 10, **characterised in that** the interface part (30) is attached releasably to the fluid guidance part (29).

12. Valve according to claim 11, **characterised in that** the releasable connection between interface part (30) and fluid guidance part (29) is realised by a screw connection, which has in particular an external thread (32) formed on the interface part (30) and an internal thread formed on a connecting section of the fluid guidance part (29).

13. Valve according to any of claims 10 to 12, **characterised in that** the sealing cartridge (40) is accommodated in the interface part, where it is releasably mounted.

## Revendications

1. Soupape, comprenant un carter de soupape (12) pouvant être traversé par un flux de milieu de processus, dans lequel est disposé un siège de soupape (17) entourant une ouverture de passage de flux (16), siège auquel un organe de soupape (18) disposé au niveau d'une broche (19) est associé de telle manière que l'organe de soupape (18) peut être déplacé au moyen d'une course de réglage de la broche (19) entre une position de fermeture, dans laquelle l'organe de soupape (18) repose tout en assurant l'étanchéité au niveau du siège de soupape (17) de manière étanche au milieu de processus, et une position ouverte, dans laquelle l'organe de soupape (18) est relevé du siège de soupape (17), et dans laquelle une interface (28) servant à accoupler une unité d'entraînement générant la course de réglage de la broche (19) est disposée au niveau du carter de soupape (12), et dans laquelle un dispositif d'étanchéité (38) traversé par la broche (19) est logé dans le carter de soupape(12), lequel dispositif d'étanchéité présente un ensemble d'étanchéité (39) précontraint au moyen de moyens de ressort, comprenant des moyens d'étanchéité reposant moyennant une étanchéification au niveau de la broche (19), dans laquelle le dispositif d'étanchéité (38) est logé dans une cartouche d'étanchéité (40) séparée du carter de soupape (12), réalisée sous la forme d'un module prémontré prêt à l'utilisation, laquelle cartouche d'étanchéité présente un carter de cartouche (41) pouvant être fixé ou fixé au niveau du carter de soupape (12), dans lequel carter de cartouche l'ensemble d'étanchéité (39) et les moyens de ressort sont logés de telle manière que l'ensemble d'étanchéité (39) est précontraint par les moyens de ressort sur ressorts par rapport au carter de cartouche (41), dans laquelle le carter de cartouche (41) présente une section de logement (42) servant à loger l'ensemble d'étanchéité (39) et les moyens de ressort, dans laquelle la section de logement (42) présente une zone d'enveloppe (43) enveloppant l'ensemble d'étanchéité (39) et les moyens de ressort et une zone de fond (45) pourvue d'un trou de passage (44) central, **caractérisée en ce que** la zone de fond (45) présente, au niveau de son côté intérieur, une surface conique (49), qui est réalisée de manière complémentaire avec une contre surface conique (48) réalisée au niveau du côté extérieur de l'ensemble d'étanchéité (39), dans laquelle le diamètre du trou de passage (44) est plus grand que le diamètre extérieur d'une zone d'extrémité de l'ensemble d'étanchéité (39) de telle manière que l'ensemble d'étanchéité (39) dépasse à travers le trou de passage (44) du fait des faces coniques (48, 49) complémentaires les unes les autres et de la précontrainte générée au moyen des moyens de ressort et se termine par son extrémité libre à l'extérieur de la zone d'enveloppe (43).

2. Soupape selon la revendication 1, **caractérisée en ce que** la cartouche d'étanchéité (40) présente une interface de fixation (52) servant à sa fixation autobloquante au niveau du carter de soupape (12), dans laquelle de préférence l'interface de fixation (52) est réalisée au niveau du carter de cartouche (41).

3. Soupape selon la revendication 2, **caractérisée en ce que** l'interface de fixation (52) présente un filetage, dans laquelle de préférence un filetage extérieur (32) réalisé au niveau de la face extérieure du carter de cartouche (41) est prévu.

4. Soupape selon l'une quelconque des revendications précédentes, **caractérisée en ce que** le carter de cartouche (41) présente une section de couvercle (50) reliée à la section de logement (42), pourvue d'une ouverture de passage (51) pour la broche (19), au niveau de laquelle est réalisée l'interface de fixation, dans laquelle de préférence la section de couvercle (50) est réalisée de manière cylindrique et le filetage extérieur (32) destiné à être vissé dans le carter de soupape (12) est réalisé au niveau de sa surface extérieure.

5. Soupape selon la revendication 4, **caractérisée en ce que** la section de recouvrement (50) présente une surface d'appui (54) tournée vers la section de logement (42), au niveau de laquelle les moyens de ressort prennent appui.

6. Soupape selon la revendication 4 ou 5, **caractérisée en ce que** la section de recouvrement (50) et la section de logement (42) sont reliées l'une à l'autre de manière inséparable, en particulier sont soudées l'une à l'autre.

7. Soupape selon l'une quelconque des revendications précédentes, **caractérisée en ce que** le dispositif d'étanchéité (38) présente une unité d'étanchéité (56) réalisée de manière séparée de l'ensemble d'étanchéité (39) reposant tout en assurant l'étanchéité au niveau de la broche (19), laquelle unité d'étanchéité est positionnée à distance axialement de l'ensemble d'étanchéité (39), dans laquelle de préférence l'unité d'étanchéité (56) présente au moins un élément étanche (57) de forme annulaire pourvu d'au moins une lèvre étanche (59a, 59b) reposant tout en assurant l'étanchéité au niveau de la broche (19).

8. Soupape selon la revendication 7, **caractérisée en ce que** l'élément étanche (57) de forme annulaire présente au moins deux lèvres étanches (59a, 59b) espacées axialement l'une de l'autre.

9. Soupape selon la revendication 7 ou 8, **caractérisée en ce que** l'unité d'étanchéité (56) est disposée dans la section de recouvrement (50) du carter de cartouche (41).

10. Soupape selon l'une quelconque des revendications précédentes, **caractérisée en ce que** le carter de soupape (12) est élaboré en plusieurs parties, avec une partie de guidage de fluide (29) présentant le siège de soupape (17) et une partie d'interface (30) cylindrique creuse réalisée séparément de la partie de guidage de fluide, pourvue de l'interface (28) servant à accoupler l'unité d'entraînement.

11. Soupape selon la revendication 10, **caractérisée en ce que** la partie d'interface (30) est fixée de manière amovible au niveau de la partie de guidage de fluide (29).

12. Soupape selon la revendication 11, **caractérisée en ce que** la liaison amovible entre la partie d'interface (30) et la partie de guidage de fluide (29) est réalisée par l'intermédiaire d'un vissage, qui possède en particulier un filetage extérieur (32) réalisé au niveau de la partie d'interface (30) et un filetage intérieur réalisé au niveau d'une section de couplage de la partie de guidage de fluide (29).

13. Soupape selon l'une quelconque des revendications 10 à 12, **caractérisée en ce que** la cartouche d'étanchéité (40) est logée dans la partie d'interface et y est fixée de manière amovible.
